# EUROPÄISCHE PATENTANMELDUNG

(11) **EP 1 787 705 A1**
(43) Veröffentlichungstag der Anmeldung: **23.05.2007**
(21) Anmeldenummer: 06121942.4
(22) Anmeldetag: 09.10.2006
(51) Int. Cl.: B01D 46/24, F01N 3/022, B01J 35/04

(54) **Filtereinrichtung, insbesondere für ein Abgassystem einer Dieselbrennkraftmaschine**

(30) Priorität: 18.11.2005 DE 102005055074
(71) Anmelder: ROBERT BOSCH GMBH, 70442 Stuttgart (DE)
(72) Erfinder: Reinsch, Bernd, 71642, Ludwigsburg (DE); Komori, Teruo, 70378 Stuttgart (DE); Thuener, Lars, 70176, Stuttgart (DE)

(57) **Zusammenfassung**

Eine Filtereinrichtung, insbesondere für ein Abgassystem einer Brennkraftmaschine, umfasst eine Filterstruktur mit sechseckförmigen Eintrittskanälen (28) und quadratischen Austrittskanälen (30), wobei die Eintrittskanäle und die Austrittskanäle durch eine Filterwand (31) aus einem offenporigen Material getrennt sind und wobei die Filterwand bereichsweise uneben ist.

## Beschreibung

### Stand der Technik

Die Erfindung betrifft ein Filterelement, insbesondere für ein Abgassystem einer Brennkraftmaschine, nach dem Oberbegriff des Anspruchs 1.

Aus der nachveröffentlichten DE 2004 0260 60.5 - 13 ist ein Filterelement bekannt mit einer Eintrittsfläche und mit einer Austrittsfläche, mit einer Vielzahl von Eintrittskanälen und mit einer Vielzahl von Austrittskanälen bekannt, wobei die Eintrittskanäle einen sechseckförmigen Querschnitt und die Austrittskanäle einen quadratischen oder rautenförmigen Querschnitt aufweisen, und wobei die Eintrittskanäle und die Austrittskanäle durch eine Filterwand aus einem offenporigen Material getrennt sind.

Dabei strömt das zu reinigende Abgas durch die Filterwände zwischen den Eintrittskanälen und den Austrittskanälen hindurch. Bei dem bekannten Filterelement lagern sich mit der Zeit an der stromaufwärts gelegenen Oberfläche der Filterwand Rußpartikel ab. Diese Rußpartikel führen zu einer Verringerung der Durchlässigkeit der Filterwand und in Folge dessen zu einer Erhöhung des Druckabfalls, der beim Durchtritt des Gasstroms durch die Filterwand auftritt. Entsprechend erhöht sich der sogenannte "Abgasgegendruck". Überschreitet dieser einen bestimmten Wert, wird der Filter regeneriert, indem die abgeschiedenen Rußpartikel verbrannt werden. Hierzu wird die Temperatur des Abgases, welches durch die Filtereinrichtung geleitet wird, erhöht, was wiederum durch die Einspritzung von zusätzlichem Kraftstoff bewirkt wird.

Aufgabe der vorliegenden Erfindung ist es, den zusätzlichen Kraftstoffbedarf für die Regenerierung der Filtereinrichtung zu reduzieren.

Diese Aufgabe wird bei einer Filtereinrichtung der eingangs genannten Art dadurch gelöst, dass mindestens eine stromaufwärts gelegene Oberfläche der Filterwand wenigstens bereichsweise uneben ist.

### Vorteile der Erfindung

Bei der erfindungsgemäßen Filtereinrichtung wird, verglichen mit einer herkömmlichen Filtereinrichtung, die stromaufwärts gelegene Oberfläche vergrößert. In Folge dessen kann dort eine größere Partikelmenge abgelagert werden, ohne dass es zu einem unzulässigen Anstieg des Druckabfalls bei der Durchströmung der Filterwand kommt. Als Konsequenz hieraus muss die erfindungsgemäße Filtereinrichtung im Vergleich zu herkömmlichen Filtereinrichtungen seltener regeneriert werden, was den insgesamt für die Regenerierung erforderlichen Kraftstoffeinsatz senkt. Außerdem kann der im Betrieb auftretende mittlere Abgasgegendruck reduziert werden, was sich positiv auf den Wirkungsgrad und das Emissionsverhalten der Brennkraftmaschine auswirkt.

Ein wesentlicher Unterschied zu den bisherigen Filtereinrichtungen besteht darin, dass diese Verringerung des Kraftstoffverbrauchs möglich ist, ohne dass die Gesamtabmessungen der Filtereinrichtung vergrößert werden. Die Vergrößerung der für die Ablagerung der Partikel zur Verfügung stehenden Fläche wird allein oder zumindest im Wesentlichen durch die unebene Ausführung der Oberfläche herbeigeführt.

Erreicht wird die dadurch, dass die stromaufwärts gelegene Oberfläche Unebenheiten und somit örtlich eine andere Steigung aufweist als eine Ebene, in der die Wand insgesamt liegt. Dies kann insbesondere bei Sintermetallstrukturen durch eine entsprechende Formung des Grünlings auf leichte Art und Weise erreicht werden. Bei der Herstellung von erfindungsgemäßen Filterelementen aus einem keramischen Werkstoff kann bei der Extrusion des Rohling ebenfalls auf einfache Weise die gewünschte unebene und/oder wellenförmige Oberfläche erzielt werden. Die erfindungsgemäß vorgesehene unebene Oberfläche führt daher zu keinen oder zumindest zu keinen wesentlichen Zusatzkosten bei der Herstellung.

Zunächst wird vorgeschlagen, dass die Oberfläche mindestens bereichsweise wellenartige Erhebungen aufweist. Mit anderen Worten: Die Steigung der Oberfläche ist nur in einer Richtung von der Steigung der Ebene unterschiedlich, in der die Wand insgesamt liegt, wohingegen sie in einer hierzu orthogonalen Richtung auch in den unebenen Bereichen der Steigung der Ebene, in der die Wand insgesamt liegt, entspricht. Eine derartige Oberflächengestalt kann bei einer Filterwand aus einem Sintermaterial oder einem keramischen Werkstoff durch Extrudieren ohne großen Kostenaufwand hergestellt werden.

Der Kostenaufwand wird nochmals reduziert, wenn die wellenartigen Erhebungen dreieckigen und/oder sinusförmigen Querschnitt aufweisen.

Dabei wird vorgeschlagen, dass bei wellenartigen Erhebungen mit dreieckigem Querschnitt das Verhältnis zwischen einer Periode und einer Amplitude der Erhebungen ungefähr zwischen 1 und 3, stärker bevorzugt ungefähr zwischen 1 und 1,5 liegt. Bei einem Verhältniswert zwischen 1 und 1,5 wird eine 50%-ige Vergrößerung der für die Ablagerung von herausgefilterten Teilchen zur Verfügung stehenden Oberfläche erzielt.

Analog hierzu wird vorgeschlagen, dass bei wellenartigen Erhebungen mit sinusförmigem Querschnitt das Verhältnis zwischen einer Periode und einer Amplitude der Erhebungen ungefähr zwischen 1 und 5,6, stärker bevorzugt zwischen 1 und 3,7, noch stärker bevorzugt zwischen 1 und 2 liegt. Bei einem Verhältniswert von 5,6 wird immer noch eine 25%-ige Vergrößerung der wirksamen Oberfläche erreicht, bei einem Wert von 3,7 sogar eine ungefähr 50%-ige Vergrößerung, und bei einem Wert von 2 sogar mehr als eine Verdoppelung.

Möglich ist aber auch, dass die Oberfläche mindestens bereichsweise hügelige Erhebungen aufweist. Dies ermöglicht, gegenüber einer ebenen Wand, eine nochmals deutliche Erhöhung der wirksamen Oberfläche, bei gleichen Gesamtabmessungen der Filtereinrichtung.

Wenn die mittlere Dicke der Wand ungefähr gleich der Dicke einer Wand mit ebener Oberfläche und gleichem Filtrationsvermögen ist, wird die größere Oberfläche und in der Folge der geringere Kraftstoffverbrauch erreicht, ohne dass ein erhöhter Materialeinsatz erforderlich ist und ohne dass die erfindungsgemäße Filtereinrichtung mehr wiegt als eine herkömmliche Filtereinrichtung.

Besonders vorteilhaft ist es, wenn mindestens die stromaufwärts gelegene Oberfläche der Filterwand eine katalytische Beschichtung aufweist. Durch die große Oberfläche wird die katalytische Wirkung beispielsweise bei einer Regenerierung der Filtereinrichtung verstärkt.

Dies erfindungsgemäßen Filterelemente können vorteilhafter Weise durch Extrudieren eines keramischen Werkstoffs, bevorzugt Cordierit oder Siliziumcarbid, oder aus Sintermetall hergestellt werden.

Alternativ ist es auch möglich, das Filterelement aus einer Vielzahl von übereinander gestapelten Lagen vorgeformter Flachmaterialien herzustellen.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

Zeichnungen

Es zeigen:
- Figur 1: eine schematische Darstellung einer Brennkraftmaschine mit einer erfindungsgemäßen Abgasnachbehandlungseinrichtung;
- Figur 2: ein erfindungsgemäßes Filterelement im Längsschnitt;
- Figur 3: Querschnitte durch Ausführungsbeispiele erfindungsgemäßer Filterelemente;
- Figur 4: eine schematische Darstellung einer ersten Ausführungsform einer stromaufwärts gelegenen Oberfläche einer Filterwand von Figur 2;
- Figur 5: eine Darstellung ähnlich Figur 4 einer zweiten Ausführungsform;
- Figur 6: eine Darstellung ähnlich Figur 4 einer dritten Ausführungsform und
- Figur 7: eine Darstellung ähnlich Figur 4 einer vierten Ausführungsform.

### Beschreibung der Ausführungsbeispiele

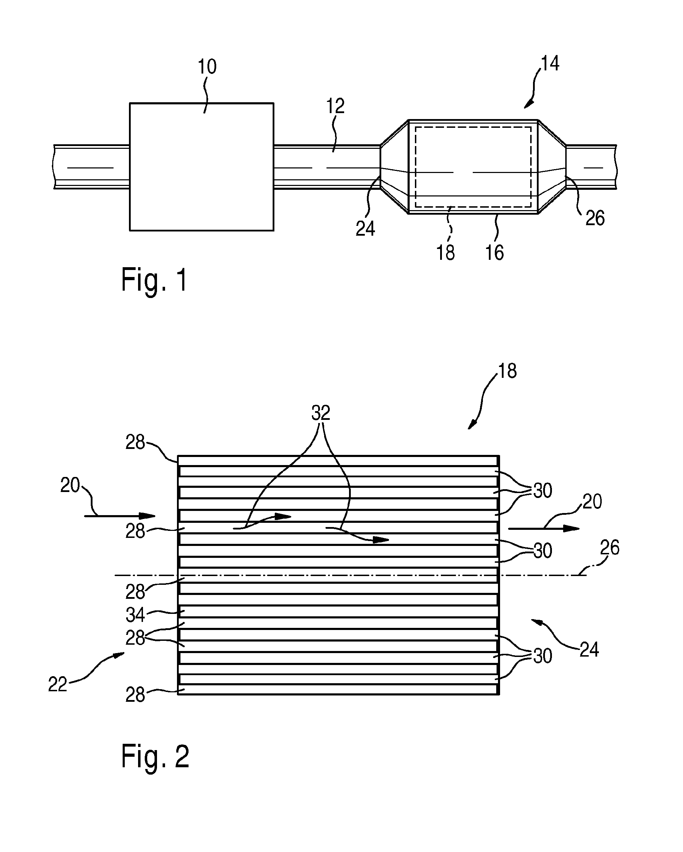

In Figur 1 trägt eine Brennkraftmaschine das Bezugszeichen 10. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert. Dies ist insbesondere bei DieselBrennkraftmaschinen erforderlich, um gesetzliche Bestimmungen einzuhalten.

Die Filtereinrichtung 14 umfasst ein zylindrisches Gehäuse 16, in dem eine im vorliegenden Ausführungsbeispiel rotationssymmetrisches, insgesamt ebenfalls zylindrisches Filterelement 18 angeordnet ist.

In Figur 2 ist ein Querschnitt durch ein erfindungsgemäßes Filterelement 18 dargestellt. Das Filterelement 18 kann beispielsweise ist als extrudierter Formkörper aus einem keramischen Material, wie zum Beispiel Cordierit, hergestellt werden.

Das Filterelement 18 wird in Richtung der Pfeile 20 von nicht dargestelltem Abgas durchströmt. Eine Eintrittsfläche hat in Figur 2 das Bezugszeichen 22, während eine Austrittsfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der Austrittsfläche 24 verschlossen. Die Verschlussstopfen sind in Figur 2 ohne Bezugszeichen dargestellt. Im Gegensatz dazu sind die Austrittskanäle 30 an der Austrittsfläche 24 offen und im Bereich der Eintrittsfläche 22 verschlossen.

Der Strömungsweg des ungereinigten Abgases führt also in einen der Eintrittskanäle 28 und von dort durch eine Filterwand 31 in einen der Austrittskanäle 30. Exemplarisch ist dies durch Pfeile 32 dargestellt.

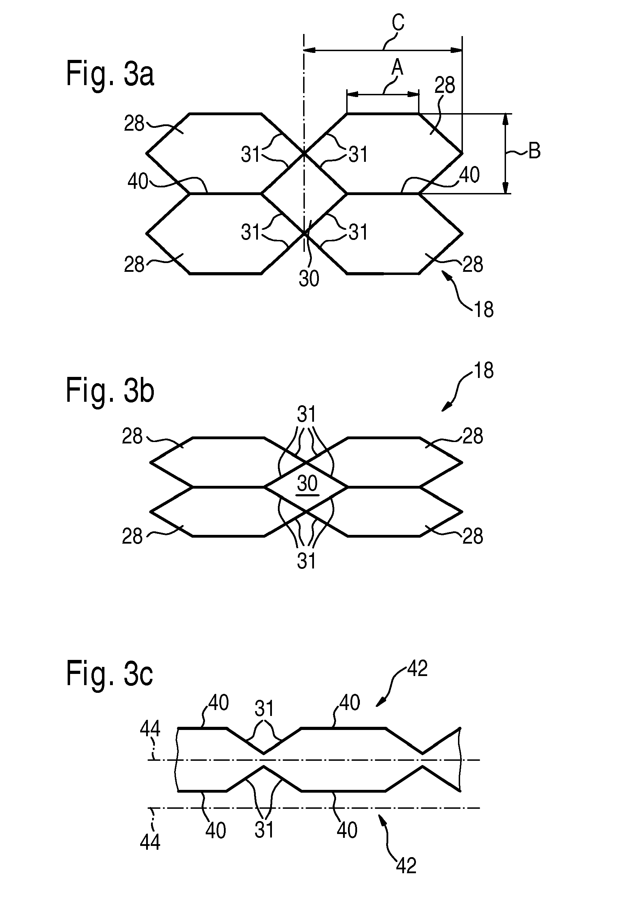

In der Figur 3a ist ein Querschnitt durch ein erstes Ausführungsbeispiel eines erfindungsgemäßen Filterelements dargestellt. Bei diesem Ausführungsbeispiel haben die Eintrittskanäle 28 einen sechseckigen Querschnitt, während die Austrittskanäle 30, von denen in Figur 3a nur einer vollständig dargestellt ist, einen quadratischen Querschnitt ausweisen. Diese Geometrie der Eintrittskanäle 28 und der Austrittskanäle 30 bedingt, dass insgesamt vier Seiten jedes sechseckigen Eintrittskanals 28 durch Filterwände 31 von insgesamt vier benachbarten Austrittskanälen 30 getrennt sind. Die verbleibenden zwei Seiten der sechseckigen Eintrittskanäle 28 verlaufen zwischen zwei benachbart angeordneten Eintrittskanälen 28.

Diese Wände zwischen zwei benachbarten Eintrittskanälen 28 sind in Figur 3a mit dem Bezugszeichen 40 versehen. Sie sind, wenn die Filterwände 31 offen sind, nicht aktiv an der Filterung des Abgases beteiligt, da dann in den benachbarten Eintrittskanälen 28 die gleichen Druckverhältnisse herrschen und die Eintrittskanäle 28 an der Austrittsfläche 24 verschlossen sind.

Wenn aber eine oder mehrere Filterwände 31 mit Ruß bedeckt sind, strömt das zu reinigende Abgas durch die Wände zwischen zwei benachbarten Einlasskanälen 28 und wird beim Durchtritt durch die Wände zwischen zwei benachbarten Einlasskanälen 28 gereinigt.

Die Ausführung das in Figur 3b dargestellte Ausführungsbeispiel ist dem in Figur 3a dargestellten Ausführungsbeispiel geometrische ähnlich. Lediglich die Proportionen und Winkel der verschiedenen Kanten der Eintrittskanäle 28 und der Austrittskanäle 30 unterscheiden sich von denen des Ausführungsbeispiels gemäß Figur 3a. Dadurch hat der in Figur 3b dargestellte Austrittskanal 30 im Querschnitt nicht die Form eines Quadrats, sondern ist rautenförmig ausgebildet.

Hergestellt werden können die Filterelement 18 entweder durch Extrudieren oder das Aufeinanderstapeln von vorgeformten Teilen. In Figur 3c sind zwei solcher vorgeformter Bauteile 42 dargestellt. Die vorgeformten Bauteile 42 werden entlang der Symmetrielinien 44 miteinander verbunden. Dies ist insbesondere dort besonders einfach möglich, wo die Wände 40 zweier benachbarter Eintrittskanäle 28 aufeinander

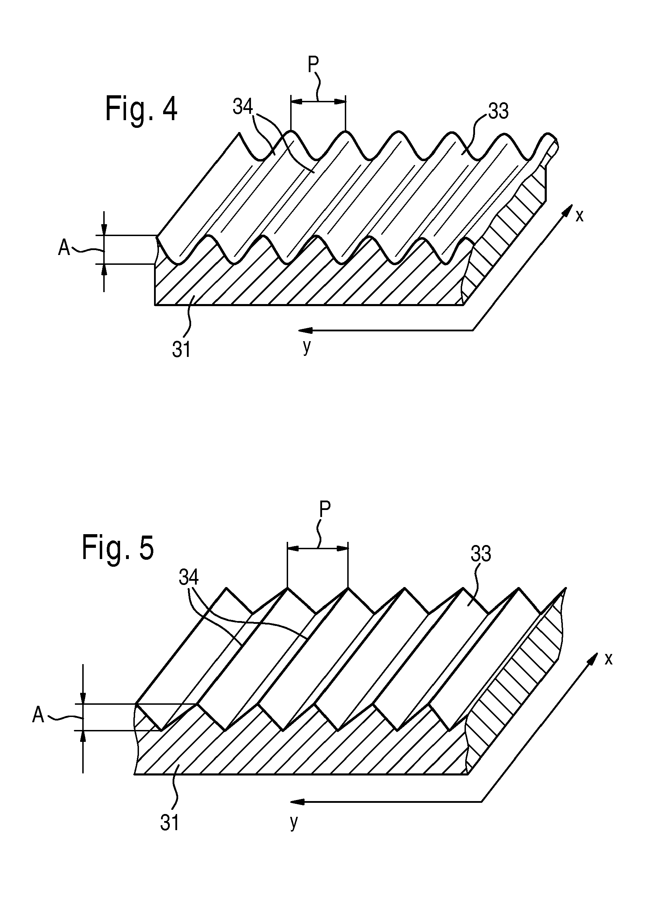

Die Filterwände 31 sind zwar insgesamt eben, sie weisen jedoch Unebenheiten auf, deren mögliche Ausgestaltungen anhand der Ausführungsbeispiele gemäß den Figuren 4 bis 7 dargestellt sind.

In einer ersten Ausführungsform, die in Figur 4 gezeigt ist, weist die stromaufwärts gelegene Oberfläche 33 einer Filterwand 31 eine Mehrzahl paralleler wellenartiger beziehungsweise sinusförmiger Erhebungen 34 auf. Die Steigung der Oberfläche 32 ändert sich bei der in Figur 4 gezeigten Ausführungsform also nur in der Y-Richtung, jedoch nicht in der X-Richtung.

Eine weitere Ausführungsform, die in Figur 5 gezeigt ist, weist ebenfalls wellenartige Erhebungen 34 auf, welche jedoch dreieckigen Querschnitt aufweisen. Auch hier ändert sich die Steigung der Oberfläche 33 nur in Y-Richtung, nicht jedoch in X-Richtung.

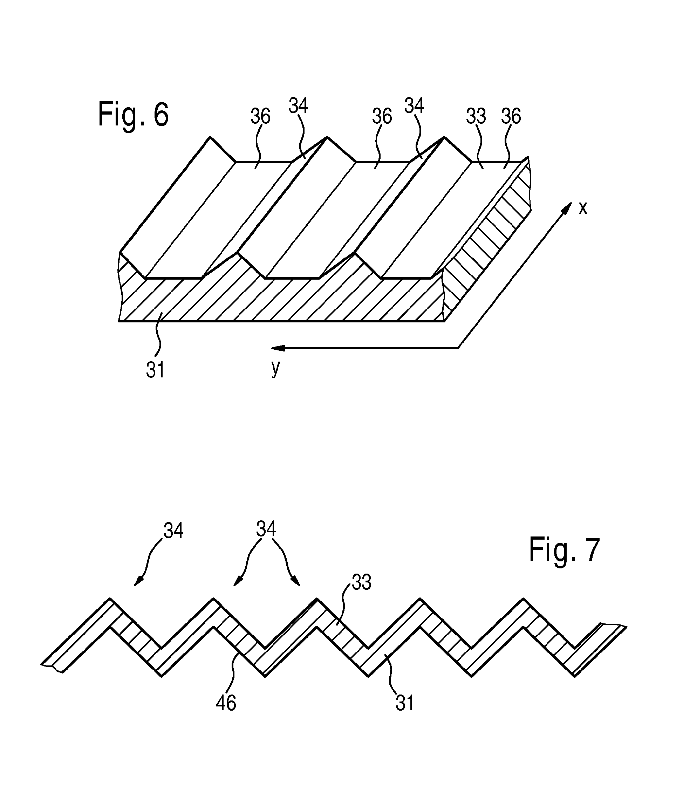

Eine Variante zu Figur 5 ist in Figur 6 gezeigt: Auch dort sind wellenartige Erhebungen 34 mit dreieckigem Querschnitt vorhanden, welche jedoch nicht unmittelbar aneinander anschließen, sondern zwischen denen ein zu den wellenartigen Erhebungen 34 paralleler ebener Bereich 36 vorhanden ist.

In Figur 7 ist ein Ausführungsbeispiel einer erfindungsgemäßen Filterwand 31 dargestellt bei dem nicht nur die Oberfläche 33, die stromaufwärts der Filterwand 31 angeordnete Oberfläche 33 Erhebungen 34 ausweist. Die Unterseite 46 der Filterwand 31 hat die gleiche Kontur wie die Oberfläche 33, sodass die Filterwand 31 ähnlich einem Wellblech oder einer Wellpappe geformt ist und überall die gleiche Wandstärke hat. Dadurch kann die mittlere Wanddicke der Filterwand 31 reduziert werden, sodass der Strömungswiderstand der Filterwand 31 bei sonst gleichen Parametern sinkt.

Alternativ ist es auch möglich an Stelle von wellenförmigen Unebenheiten an den Oberflächen 33 der Filterwände 31 eine Mehrzahl hügeliger Erhebungen vorzusehen (nicht dargestellt). Diese Erhebungen können beispielsweise eine kegelige, pyramidenförmige, spitze, und/oder abgerundete Gestalt haben.

## Patentansprüche

1. Filterelement (18), insbesondere zur Filterung von Abgasen einer Dieselbrennkraftmaschine, mit einer Eintrittsfläche (22) und mit einer Austrittsfläche (24), mit einer Vielzahl von Eintrittskanälen (28), und mit einer Vielzahl von Austrittskanälen (30), wobei die Eintrittskanäle (28) einen sechseckförmigen Querschnitt aufweisen, wobei die Austrittskanäle (30) einen quadratischen oder rautenförmigen Querschnitt aufweisen, und wobei die Eintrittskanäle und die Austrittskanäle durch eine Filterwand (31) aus einem offenporigen Material getrennt sind, **dadurch gekennzeichnet, dass** mindestens eine stromaufwärts gelegene Oberfläche (33) der Filterwand 31 (22) wenigstens bereichsweise uneben ist (34).

2. Filterelement (18) nach Anspruch 1, **dadurch gekennzeichnet, dass** die Oberfläche (33) mindestens bereichsweise wellenartige Erhebungen (34) aufweist.

3. Filterelement (18) nach Anspruch 2, **dadurch gekennzeichnet, dass** die wellenartigen Erhebungen (34) dreieckigen und/oder sinusförmigen Querschnitt aufweisen.

4. Filterelement (18) nach Anspruch 3, **dadurch gekennzeichnet, dass** bei wellenartigen Erhebungen (34) mit dreieckigem Querschnitt das Verhältnis zwischen einer Periode und einer Amplitude der Erhebungen ungefähr zwischen 1 und 3, stärker bevorzugt ungefähr zwischen 1 und 1,5 liegt.

5. Filterelement (18) nach Anspruch 3, **dadurch gekennzeichnet, dass** bei wellenartigen Erhebungen (34) mit sinusförmigem Querschnitt das Verhältnis zwischen einer Periode und einer Amplitude der Erhebungen ungefähr zwischen 1 und 5,6, stärker bevorzugt zwischen 1 und 3,7, noch stärker bevorzugt zwischen 1 und 2 liegt.

6. Filterelement (18) nach einem der vorhergehenden Ansprüche, **dadurch gekennzeichnet, dass** eine mittlere Dicke der Filterwand (31) ungefähr gleich der Dicke einer Filterwand mit ebener Oberfläche und gleichem Filtrationsvermögen ist.

7. Filterelement (18) nach einem der vorhergehenden Ansprüche, **dadurch gekennzeichnet, dass** das Filterelement (18) durch Extrudieren hergestellt wird.

8. Filterelement (18) nach einem der vorhergehenden Ansprüche, **dadurch gekennzeichnet, dass** das Filterelement (18) aus vorgeformten Stücken (42) eines ursprünglich flachen Materials zusammengesetzt wird.

9. Filterelement (18) nach einem der vorhergehenden Ansprüche, **dadurch gekennzeichnet, dass** das Filterelement (18) aus einem keramischen Werkstoff, insbesondere aus Cordierit, hergestellt wird.

10. Filterelement (18) nach einem der Ansprüche 1 bis 8, **dadurch gekennzeichnet, dass** das Filterelement (18) aus Sintermetall hergestellt wird.

11. Filterelement nach einem der vorhergehenden Ansprüche, **dadurch gekennzeichnet, dass** die Eintrittskanäle (28) an der Eintrittsfläche (22) beginnen und an der Austrittsfläche (24) verschlossen sind, und dass die Austrittskanäle (30) an der Eintrittsfläche (22) verschlossen sind und an der Austrittsfläche (24) enden.
